Europäisches Patentamt

(19) European Patent Office

Office européen des brevets

(11) Publication number: **0 095 994**
**B1**

(12) **EUROPEAN PATENT SPECIFICATION**

(45) Date of publication of patent specification: **06.07.88**

(21) Application number: **83630086.3**

(22) Date of filing: **20.05.83**

(51) Int. Cl.⁴: **G 05 D 1/00, G 01 C 23/00**

(54) Helicopter power available to hover indicator.

(30) Priority: **26.05.82 US 382257**

(43) Date of publication of application:
**07.12.83 Bulletin 83/49**

(45) Publication of the grant of the patent:
**06.07.88 Bulletin 88/27**

(84) Designated Contracting States:
**DE FR GB IT**

(56) References cited:
**US-A-3 272 004**
**US-A-3 287 965**
**US-A-3 616 691**
**US-A-4 034 605**

(73) Proprietor: **CHANDLER EVANS INC.**
**Charter Oak Boulevard**
**West Hartford Connecticut 06101 (US)**

(72) Inventor: **Lappos, Nicholas D.**
**53 Colonial Road**
**Madison Connecticut 06443 (US)**
Inventor: **Zagranski, Raymond D.**
**50 Cricket Lane**
**Somers Connecticut 06071 (US)**
Inventor: **Howlett, James J.**
**40 Kings Highway**
**North Haven Connecticut 06473 (US)**

(74) Representative: **Waxweiler, Jean et al**
**OFFICE DENNEMEYER S.à.r.l. P.O. Box 1502**
**L-1015 Luxembourg (LU)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to helicopters, and more particularly for. automatically providing, during forward flight, an indication of the engine power currently available compared to the power which would be required to hover under current aircraft, engine and environment conditions.

Heretofore, instruments that provide an indication to a helicopter pilot of a comparison of the power currently available and that which would be required under current weight and atmospheric conditions in order to hover, thereby providing an indication of the safety and maneuverability of a hover, or the power available for a run-on landing, have not been adequate in many respects. Such prior hover indicators depend on either the pilot providing an input of the total gross weight at takeoff, or a wheel weight transducer providing an input thereof. The weight has been used together with fixed schedules of aircraft and engine design parameters to approximate both the power required to hover under the then current weight and the power which should be available to accommodate the hover together with any maneuvering during hover. Such open loop calculations do not account for changing atmospheric conditions, deteriorated or failed engines, or deterioration of the rotor systems.

US—A—3 272 004 discloses a horse power remaining computer for a gas generator computing on the basis of actual gas discharge temperature, actual gas generator or turbine speed or actual torque and corresponding reference values the lowest remaining power available from the engine.

US—A—3 287 965 discloses a power performance computer for a gas generator computing on the basis of the actual power generated by the engine and the remaining power available from the engine (computed in . accordance with US—A—3 272 004) the power which the engine can develop which is compared with the rated power for the actual conditions at the gas generator inlet to generate a power performance signal commensurate with the proximity of the rated power to the power which the engine can develop.

The consequences of the pilot attempting flare or hover maneuvers with insufficient power can be disastrous. An example is flying bags of water to a tank atop a mountain. The air density may be low due to the altitude of the mountain, and in certain cases the temperature may nonetheless be high, further reducing density and curtailing engine power. As is well known, the power required to hover and the power required for maximum speed are both maximal, whereas the power to cruise at "bucket speed" [on the order of 111 km/h (60 knots) or so] is minimal. Thus the pilot may have no difficulty, even at a relatively high climb rate, when climbing at a forward speed which is the "best speed for climbing" (which is usually very near to the bucket speed). Yet, when attempting to hover in order to permit unloading the water, the helicopter may drop sharply, or even crash.

Another example is a sharp descent toward a forest fire near the end of which the water is to be released to aid in quenching the fire, followed by a sharp flare so that the helicopter will avoid the effects of the fire. If insufficient power is available (which may well be the case in the very hot air above a fire), the helicopter may simply fly right into the fire (particularly if the water load is not completely released before the flare).

Disclosure. of Invention

Objects of the invention include automatic calculations of the power required to hover and the maximum power available to satisfy that requirement, which take into account deterioration of the rotor system and/or deterioration and/or failure of the engines, as well as current atmospheric conditions and aircraft weight.

According to the present invention, engine parameters are utilized to calculate the current operating power during forward flight, with or without climb, and the power required to hover is determined from the relationship between power required for forward flight at various airspeeds and power required to hover; maximum current available power is calculated from engine parameters by means of an engine model algorithm, and the relationship therebetween is expressed on a pilot indicator. In further accord with the invention, the pilot indicator is updated and indicated as being ready (reliable) only during relatively steady operating conditions. In still further accord with the present invention, the power required to hover is determined from a relationship of required hover power and airspeed at various speeds together with rate of climb. According to the invention further, the indication is expressed as the difference being available and required power, normalized to required power.

The present invention, by utilizing a known relationship between hover power and power required for forward flight at various speeds, as well as modifications thereto as a function of climb rate, to generate current hover power requirements from current actual power being used, provides a hover power requirement indication which is indicative of both deteriorated or partially failed rotor systems and current atmospheric conditions and weight. For instance, if icing of the rotor blades had occurred, more power would be required in forward flight and a commensurate amount of additional power would be required to hover. Thus, determining hover power from actual power in forward flight will take such into account. Similarly, variations in atmospheric conditions and weight which affect the amount of power which must be provided to the rotor in order to sustain forward flight will be taken into account automatically by ratioing the power for forward flight to the power required to hover. Similarly, by utilizing current engine conditions to generate the maximum shaft kilowatts (horsepower) available from the engine, engine deterioration and even total failure will be indicated automatically. Thus, in a multi-engine helicopter, should one engine fail entirely, the engine model calculations utilizing parameters of that engine would indicate no power available therefrom. Or, if the engine were severely deteriorated, the engine parameters being fed to the model would provide a model output indicative thereof. And, even the power which the engine can generate under current atmospheric conditions is also provided by the model. Thus, all contingencies are met, the only error being in the accuracy of the ratio of hover power to actual power and the accuracy of the maximum available power model which is used. These can be limited to a very small amount, particularly if worst case conditions are accounted for.

The present invention may be implemented in analog, digital, or programmed computer technology, utilizing apparatus and techniques which are readily available to the art, in the light of the specific teachings relating thereto which follow hereinafter. However, the invention is described as it may be utilized in an aircraft having a computer, such as in a digital fuel control or in an automatic flight control system, additional programs of which can facilitate implementation of the invention.

Other objects, features and advantages of the present invention will become more apparent in the light of the following detailed description of exemplary embodiments thereof, as illustrated in the accompanying drawings.

Brief Description of Drawings

Fig. 1 is a chart illustrating a compressed curve of the power required for forward flight as a function of airspeed expressed as a percent of the power required to hover, with points indicative of changes therein resulting from vertical velocity (ascent and descent) during forward flight;

Fig. 2 is a simplified schematic block diagram illustrating the basic principles of the present invention;

Fig. 3 is a simplified logic flow diagram of a computer routine for determining maximum available shaft kilowatts (horsepower) in accordance with one type of engine model algorithm; and

Fig. 4 is a simplified logic flow diagram illustrative of a computer routine for providing an indication of the power required to hover in accordance with the invention.

Best Mode for Carrying Out the Invention

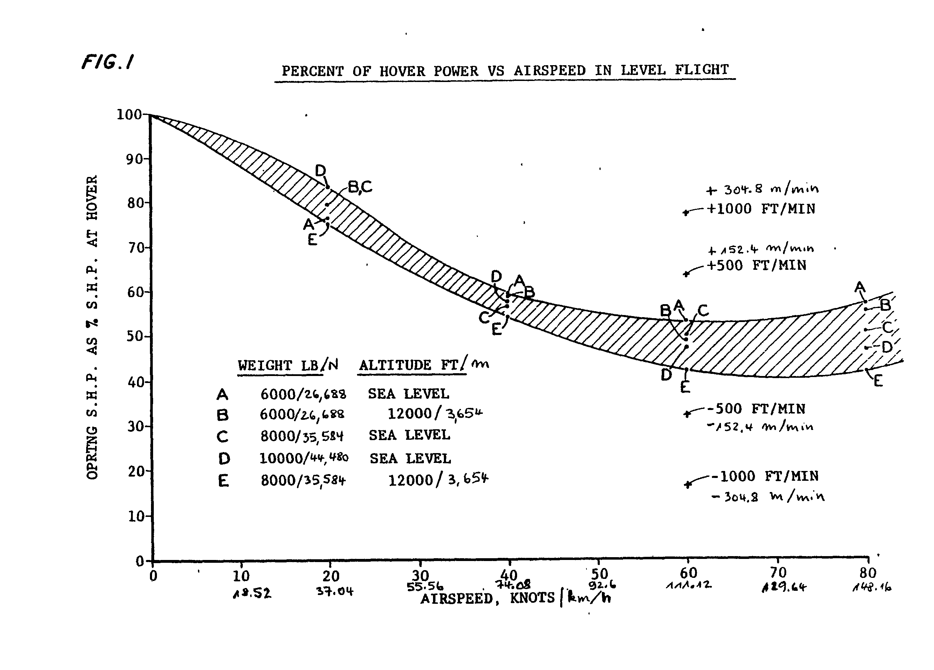

Referring now to Fig. 1, the power required for level forward flight of a helicopter at various airspeeds is expressed as a percent of the power required to hover, for a variety of helicopter weights and altitudes. The curve of Fig. 1 represents, at various airspeeds, the ratio of forward flight power required at such speed to the power required to hover. In a given helicopter wherein the gross weight may vary between 26,688 and 44,480 N (6,000 and 10,000 lbs.), and designed for operation between sea level and 3,658 m (12,000 ft.), the maximum deviation among weight and altitude is somewhat less than 10% of the power required to hover. In addition, several vertical velocity points are shown at 111 km/h (60 knots), deemed in this example to be the best speed for climb, which may also be quite close to the minimum power forward flight speed of the helicopter. These points indicate how the ratio of forward flight power to hover power changes at 111 km/h (60 knots) for climb rates of 152.4 and 304.8 m (500 and 1,000 ft.) per minute and descents of 152.4 and 304.8 m (−500 and −1,000 ft.) per minute.

The gist of the present invention is that a schedule, generally indicated by the curve of Fig. 1, can be established for various airspeeds (with or without vertical velocity) which will indicate, during forward flight at reasonable airspeeds [such as up to 148 km/h (80 knots) or so], the ratio of actual, current operating power to power which would be required to hover under the same rotor, engine and atmospheric conditions. Thus, if the aircraft currently had a gross weight of 26,688 N (6,000 lbs.) and was flying at 3,658 m (12,000 ft.) (condition B in Fig. 1), at 111 km/h (60 knots) in level flight, current operating power is 50% of power required to hover under the same rotor, engine, and atmospheric conditions. Thus, the power required to hover can be determined in such case simply by dividing by one-half (doubling) the operating power actually required. But as that same aircraft descends toward sea level (condition A in Fig. 1), the forward level flight power increases to nearly 60% of the power required to hover, so that the hover power could be determined by actual current flight power divided by about six-tenths.

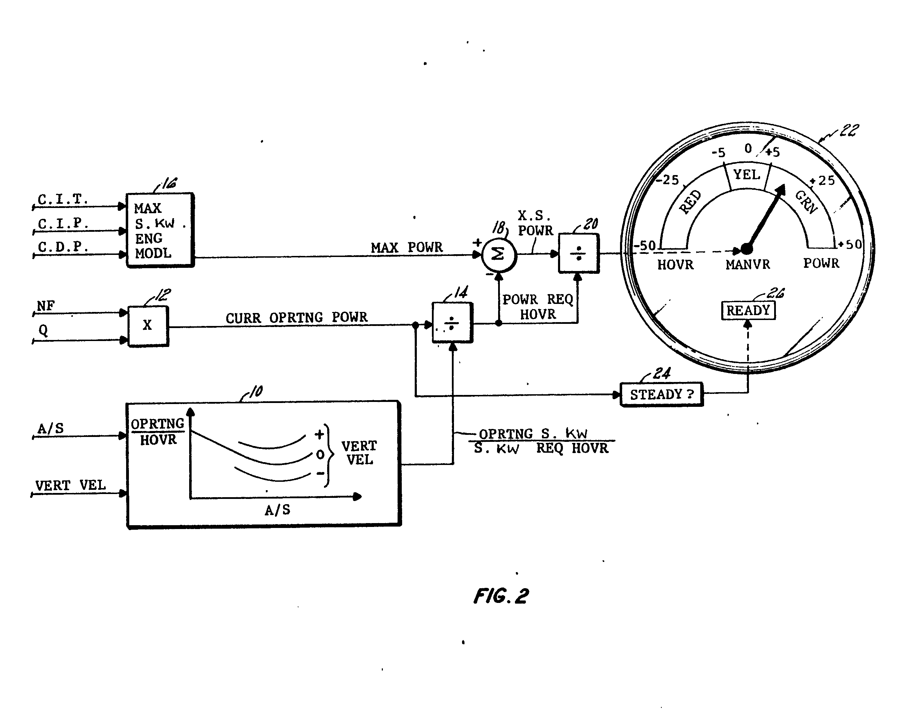

The foregoing is illustrated more fully in Fig. 2. Therein, a schedule 10 (which may be a lookup table) is indicated as including a plurality of curves similar to the compressed curve illustrated in Fig. 1. For each vertical velocity (either ascent, descent or level flight), a compressed curve similar to that of Fig. 1 would be applicable. To be safe, the worst-case condition should be selected, which is the data points at the bottom of the compressed curve in Fig. 1 for use in the schedule 10. For instance, the schedule 10, for zero rate of climb (level flight), may use a curve which includes the data points of condition E, which indicate current power as being the lowest fraction of power required to hover, thereby safely indicating the maximum hover power which may be required (without taking into account the conditions differing between A—E). Thus, at level flight in 111 km/h (60 knots), if condition B obtained, and the power required to hover were twice that currently being used, utilization of the lowest data point of Fig. 1 (condition E) would cause the current power required to be divided by essentially 0.4 rather than 0.5 and thus yield an indication of a higher power requirement for hover, thereby being safe. Such individual curves, represented as data points for a large number of airspeeds (only a few being shown in Fig. 1) and a suitable number of vertical velocities (only a few shown being at 111 km/h (60 knots) in Fig. 1) would make a suitable lookup table to represent the schedule 10 of Fig. 2.

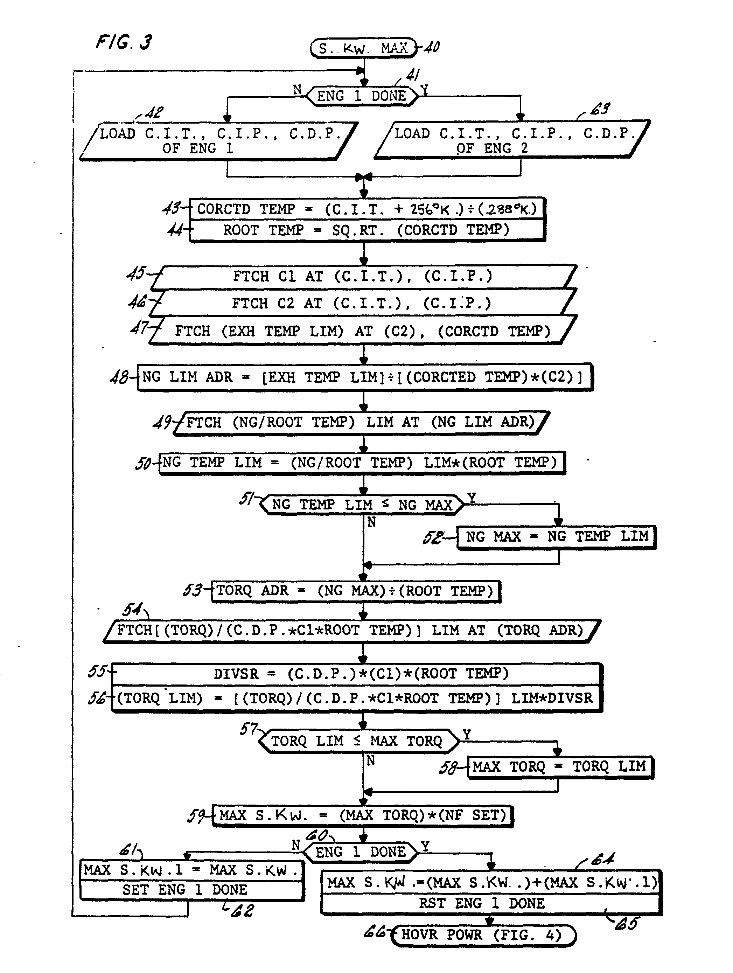

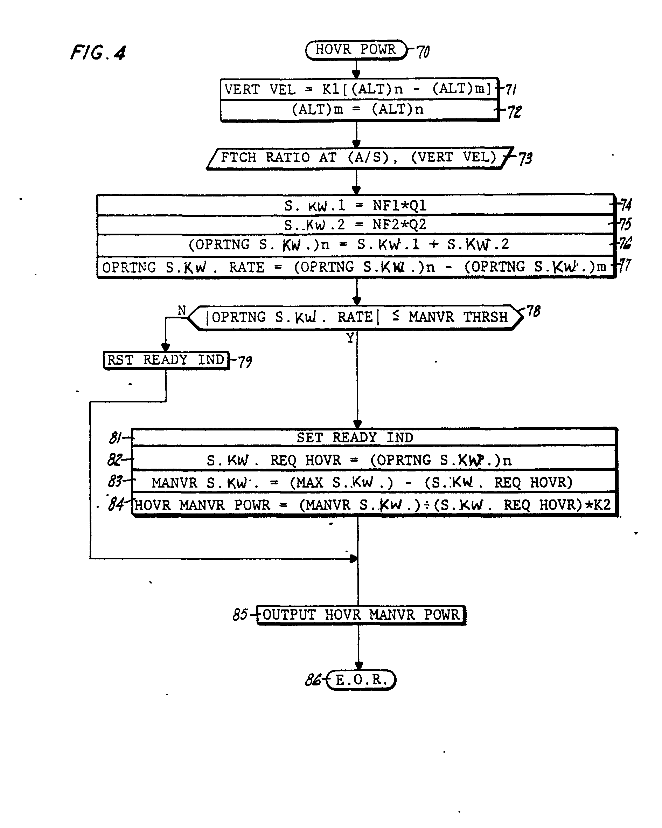

The schedule 10 is accessed by airspeed and vertical velocity inputs, and the output is a ratio of current operating power to power required to hover. A block 12 is indicative of determining current operating power simply by multiplying the engine free turbine speed (NF) by engine torque (Q). Dividing the current operating power, as at 14, by the ratio determined from the schedule 10, provides an indication of the power required to hover under the current rotor, engine and atmospheric conditions. An engine model, indicated by block 16, is capable of providing a reasonably accurate indication of the maximum shaft horsepower currently available from the power plant, which may include one or several engines, as a function of compressor inlet temperature, compressor inlet pressure and compressor discharge pressure. This provides a maximum power available signal. In the general case, these two signals give the pilot the indication he needs in order to determine the capability to hover and perhaps even to maneuver at hover. Similarly, the capability to maneuver at hover is indicative of the capability of performing a safe flare, to terminate a sharp descent. However, a better indication to the pilot is one which tells him what the circumstance will be at hover. For that reason, the power required to hover is subtracted from the maximum power available, as at 18, to provide a signal indicative of the excess power (or defficiency, depending upon whether maximum power exceeds the required hover power or not) which is then normalized to the power required to hover, by division as at 20, to provide an indication of helicopter maneuvering capability in terms of the power required to hover. This puts the indication to the pilot in a manner related to the capability to maintain flight without forward speed, thereby to assist in assessing the severity of maneuvers which may be undertaken, or, if a negative excess power condition exists, the relative difficulty of making a run-on landing. The indicator is illustrated as having red, yellow and green zones to assist the pilot in assessing his situation, as well as providing indications of positive and negative excess maximum power compared with that required to hover under current conditions. In addition, a block 24 illustrates the desirability of providing a ready indication 26 on the indicator 22 whenever current operating conditions are relatively steady, since the indication of the present invention may be inaccurate during maneuvering or other perturbations in flight conditions. An exemplary implementation of the invention is described hereinafter as it may be embodied in a suitably programmed computer, such as in a digital fuel control or a digital automatic flight control system employing a computer. In such a computer, only two computer routines need be added as illustrated in Figs. 3 and 4, the remaining routines (for fuel control or automatic flight control) and the routines utilized to initialize the system, acquire and output data, and the like, are all conventional, well within the skill of the art, and irrelevant to the invention. Thus, these are not described herein.

Referring to Fig. 3, a computer routine for calculating the maximum available shaft horsepower under current engine and atmospheric conditions is reached through an entry point 40 and a first test 41 determines if the calculation has been made for engine 1 or not. Initially, the first engine calculation has not been done and a negative result of test 41 will reach a subroutine 42 for loading parameters relating to engine 1 into the working registers for the routine. The parameters utilized in the engine model of the present embodiment include compressor inlet temperature (C.I.T.), compressor inlet pressure (C.I.P.) and compressor discharge pressure (C.D.P). Then a step 43 calculates a corrected temperature (sometimes referred to as "theta") by adding 256° Kelvin (460° Rankine) to the compressor inlet temperature and dividing the sum by 288° Kelvin (519° Rankine). Next, a term (frequently referred to as "theta root"), referred to herein as "root temperature", is calculated in step 44 as the square root of the corrected temperature. Then a subroutine 45 fetches a first constant, C1, from a lookup table identified by a base address component (not shown) and the current compressor inlet temperature and compressor inlet pressure. And a subroutine 46 similarly fetches a constant, C2, from a lookup table located by a base address component (not shown) and the current compressor inlet temperature and compressor inlet pressure. The composite of compressor inlet temperature and pressure specify the data point to be reached in the lookup tables. Of course, if desired, the data points themselves may be expressed in terms of base amounts and slopes of interpolation, or may simply contain sufficient points for the desired accuracy without interpolation.

Next, a subroutine 47 fetches an exhaust temperature limit (sometimes referred to as T5 LIM) from a lookup table specified (in addition to a base address, not illustrated) by a composite address which includes C2 and the corrected temperature. Then, a step 48 calculates a gas generator speed limit address (an address used in addition to a base lookup table address therefor) as the exhaust temperature limit reached by the subroutine 47 divided by both the corrected temperature and C2. This is because the next parameter to be fetched, the ratio of gas generator speed to root temperature, is related to the ratio of exhaust temperature to the product of corrected temperature and C2. Then the subroutine 49 fetches the ratio of gas generator speed to root temperature at the address formulated in step 48. The fact that step 49 is fetching a limiting value of gas generator speed as a function of root temperature is simply because the value of the ratio which is fetched is one reached by an address formulated from the limiting exhaust temperature fetched in step 47. Step 50 multiplies the ratio of gas generator speed to root temperature, fetched in subroutine 49, by root temperature so as to provide a temperature limited gas generator speed. That is to say, this is a limiting speed of the gas generator dictated by temperature considerations under current inlet temperature and pressure conditions. Then a test 51 determines if the temperature limited gas generator speed is less than the design maximum gas generator speed. If it is not, then a step 52 will set the maximum gas generator speed to the lower, temperature limited gas generator speed. But if the temperature limitation exceeds the mechanical design limitation, step 52 is bypassed so that the maximum design gas generator speed will be used in the further calculations of the engine model.

In Fig. 3, a step 53 formulates a torque address by dividing the maximum gas generator speed by root temperature. Then, a lookup table (identified by the base address, not shown) containing a ratio of torque to the product of compressor discharge pressure, a constant (C1), and root temperature, as a function of gas generator speed, is accessed utilizing the torque address (maximum gas generator speed) determined in steps and tests 43—53. Then a step 55 formulates a divisor of the factor accessed by the subroutine 54, to be used in a step 56 which multiplies the torque ratio accessed in subroutine 54 by the divisor so as to provide a torque limit determined by a maximum gas generator speed, which in turn was determined as either the mechanical, design maximum gas generator speed or a temperature limited gas generator speed. Then a test 57 determines if the torque limit is less than the design maximum torque for the engine, and if it is, maximum torque is set equal to the torque limit. But if it is not less than maximum design torque, then step 58 is bypassed so that maximum design torque is used instead, during the remaining calculations of the model. Then in a step 59 the maximum shaft kilowatts (horsepower) is calculated as the product of maximum torque times the current reference speed (NF SET) of the engine's free turbine.

In Fig. 3, following calculation of maximum shaft horsepower for the first engine, a test 60 determines if the first engine calculation is completed or not. In the first pass through the bulk of Fig. 3, test 60 will be negative reaching a step 61 which saves the calculated value of maximum shaft kilowatts (horsepower) for the first engine followed by a step 62 which sets the engine 1 done discrete. Then the routine reverts back to test 41 which now will be affirmative, so that a subroutine 63 will load the working registers for the routine of Fig. 3 with the compressor inlet temperature, compressor inlet pressure and compressor discharge pressure of engine 2. Then, all of the tests and steps 43—59 are repeated utilizing the temperature and pressures of engine 2. Note that it is assumed that both engines have the same design parameters and can therefore utilize the same lookup tables, schedules and constants. Otherwise, suitable modifications to the routine should be made.

When maximum shaft kilowatts (horsepower) has been generated for engine 2 in step 59, test 60 is again reached and this time is affirmative, reaching a step 64 which provides maximum shaft kilowatts (horsepower) as a summation of that just generated for the second engine with maximum shaft kilowatts (horsepower) for the first engine which was saved in step 61. This provides a value of maximum shaft kilowatts (horsepower) available from the power plant, which includes that for both engines in the exemplary embodiment. Then, a step 65 resets the engine 1 done discrete so that the next pass through the routine of Fig. 3 will begin with engine 1, due to a negative result of test 41. And then the routine is exited and the hover power routine of Fig. 4 is reached through a transfer point 66.

Because the subroutine of Fig. 3 independently generates current maximum shaft kilowatts (horsepower) for each engine, using actual engine parameters, the accuracy of the calculation is limited only by the validity of the model. Since this is within a few percent of rated power, it is not only quite adequate, but far superior to the use of design rated power indications, as in the prior art.

In Fig. 4, the hover power routine is reached through an entry point 70 and a first step 71 determines the vertical velocity by subtracting the aircraft altitude for a next preceding cycle (designated by "m") from the altitude determined in the current cycle (designated by "n"), and multiplying the difference by a constant, K1, which takes into account the cycle time of the routine of Fig. 4. Then the altidue is updated for use in the next cycle in a step 72. Next, a subroutine 73 fetches the ratio of power for forward flight to power required for hover from a lookup table (10, Fig. 2) at a base address (not shown) to reach data points specified by address components including airspeed and vertical velocity. Then, the current actual operating shaft kilowatts (horsepower) for the power plant is calculated in steps 74—76. In steps 74 and 75 the shaft kilowatts (horsepower) for each engine is calculated as the product of the engine's free turbine speed times the engine output torque. In step 76, the operating shaft kilowatts (horsepower) for the current cycle is generated as a summation of the calculated shaft kilowatts (horsepower) for both engines. In step 77, a rate of change operating shaft kilowatts (horsepower) is generated by subtracting the operating shaft kilowatts (horsepower) calculated in the preceding cycle from the operating shaft kilowatts (horsepower) calculated in the present cycle. This rate is compared in a test 78 to determine if it is less than some maneuvering threshold, above which the generated data would be faulty. If the rate of change of operating shaft kilowatts (horsepower) is not below a maneuvering threshold, this is indicative of a transient condition where it cannot be relied on to extrapolate to hover power required. Therefore, a negative result test 78 will reach a step 79 to reset the ready indicator (26, Fig. 2) and also bypass a series of steps which otherwise would calculate the hover maneuver power for application to the indicator 22, Fig. 2. However, when the operating shaft kilowatts (horsepower) is not sufficiently steady, after the ready indicator is reset by step 79, the last, previously calculated value of hover maneuver power is set up for output to the indicator 22 by a step 85, before the program is ended, as at 86.

In the case where the operating shaft kilowatts (horsepower) is relatively steady, an affirmative result of test 78 will reach step 81 which sets the ready indicator (26, Fig. 2). Then the shaft kilowatts (horsepower) required to hover is calculated in step 82 by dividing the operating shaft kilowatts (horsepower) of the current cycle by the ratio fetched from the lookup table (equivalent to 14, Fig. 1). Then the maneuvering shaft kilowatts (horsepower) is calculated in step 83 as a difference between the maximum shaft kilowatts (horsepower) calculated in the routine of Fig. 3 and the inferred shaft kilowatts (horsepower) required to hover calculated in step 82. In step 84, the hover maneuvering power is normalized by dividing the maneuver shaft horsepower by the shaft kilowatts (horsepower) required to hover; in this step, the data word representing hover maneuver power may be scaled by a constant K2 which is related to the full scale deflection of the indicator 22, in the well known fashion.

Thus, the routine of Fig. 4 determines the vertical velocity, fetches the ratio of forward flight power to hover power from a lookup table in response to airspeed and rate climb, generates the operating shaft kilowatts (horsepower) for each engine, determines if it is steady enough to be reliable, calculates the power required to hover from the ratio, determines the difference between maximum shaft kilowatts (horsepower) and the power required to hover, and normalizes and scales it for application to the indicator.

The present invention has been disclosed as it may be implemented in routines of a computer, such as a computerized digital fuel control or a computerized digital automatic flight control system. The generation of maximum shaft kilowatts (horsepower) has been illustrated in accordance with a particular, known engine model; however, other models or methods of generating a reasonably accurate and current value of maximum available power may be used in conjunction with the invention if desired, the particular method of determining maximum power is not relevant to the present invention so long as it does reflect current engine and atmospheric conditions to a suitable degree.

The engine torque indications utilizing step 76 may be taken from torque meters that normally provide torque information to the pilots to enable them to balance the two engines; but if the engines do not have torque meters, a torque model employing other engine parameters, such as turbine temperature drop, may be used if desired, provided it is sufficiently accurate to serve the desired use of the present invention.

The invention is disclosed as utilizing airspeed and vertical velocity to access ratios of power required for forward flight to hover power as described hereinbefore. But if desired, a more complex family of curves may include the effects of altitude which are illustrated in Fig. 1. This would provide relatively little improvement at speeds below 92.6 km/h (50 knots), and could provide 8% or 9% more accuracy at 111 km/h (60 knots) and above, in some cases. And, other parameters, such as temperature, could be included, if desired, to improve accuracy or extend the speed at which the ratio is sufficiently accurate (e.g., within 10% or so).

On the other hand, a single curve could be utilized accessed only by airspeed if desired, provided that the ready light included an indication of minimal vertical velocity, such as by an additional test following test 78 in Fig. 4. However, this would preclude obtaining readings during flights up a mountain or during normal descents. Obviously, the ratio expressed in Fig. 1 could be reworked to the reciprocal thereof, expressing the power required to hover as a function of the power required for forward flight. Then the multiplication function would be utilized in place of the division function (14, Fig. 2; 82, Fig. 4). The invention is described in a helicopter having a two-engine power plant. Obviously, the invention is easily implemented for a helicopter utilizing one engine or more than two engines. Further, it should be understood that the indication to the pilot may simply be the positive excess or negative deficiency of maximum available power compared to power required to hover, or some other desired function. All of the foregoing is irrelevant to the invention; the significant thing is that a dynamic engine model utilizes current engine operating conditions to generate a maximum available power indication which reflects engine and atmospheric conditions, and that the power required to hover is developed from a ratio relating it to the actual current operating power, which takes into account weight, rotor condition, and atmospheric conditions.

**Claims**

1. Apparatus for indicating power available for hovering a helicopter having a power plant including at least one engine, comprising:
    a power indicator;
    transducer means for providing one or more parameter signals, each such parameter signal being indicative of a related current aircraft condition; and
    signal processing means responsive to said parameter signals for providing to such indicator a hover power signal indicative of power available for hover;

characterized in that

said parameter signals comprise engine parameter signals indicative of current engine operating conditions and an aircraft flight parameter signal indicative of current airspeed; and that

said signal processing means comprise means (10) for providing, in response to said aircraft flight parameter signal, a ratio signal indicative of the relationship between the power required during forward flight at the current airspeed and the power required to hover under the same rotor, engine, weight and atmospheric conditions, means (12) for providing, in response to a first plurality of said engine parameter signals, an operating power signal indicative of current power being supplied by the engine to the aircraft, means (14) for providing, in response to said current operating power signal and said ratio signal, a power required to hover signal indicative of the power required to execute a hover maneuver under the present rotor engine, weight and atmospheric conditions, means (16) for providing, in response to a second plurality of said engine parameter signals, a maximum power signal indicative of the maximum power which can currently be supplied by the power plant, and means (18; 20) for providing said hover power signal to said power indicator (22) in response to said maximum power signal and said power required to hover signal.

2. Apparatus according to claim 1 characterized in that

said parameter signals further comprise a second aircraft flight parameter signal indicative of current altitude; and that

said means (10) for providing said ratio signal provides said ratio signal indicative of the relationship between the power required during forward flight at the current airspeed and vertical velocity and the power required to hover under the same rotor, engine, weight and atmospheric conditions in response to said aircraft flight parameter signals.

3. Apparatus according to claim 1 characterized in that

said means (18; 20) for providing said hover power signal to said indicator provides said hover power signal as the difference (18) between said maximum power signal and said power required to hover signal divided (20) by said power required to hover signal, whereby said power indicator indicates the excess or deficiency of power at hover normalized to the power required to hover.

4. Apparatus according to claim 1 characterized by:

said signal processing means comprising means for providing (77), in response to said operating power signal, a rate of change signal indicative of the time rate of change of said operating power signal, for generating (78, 81—85) a new value of said hover power signal and providing it to said power indicator, in response to said rate of change signal being below a predetermined threshold magnitude, and for providing (78, 79, 85) to said indicator (22) a previously generated hover power signal, in response to said rate of change signal being in excess (79) of said predetermined threshold magnitude.

5. Apparatus according to claim 4 characterized by:

said power indicator including ready means (26) for providing an indication to the pilot that the indication thereof is current; and

said signal processing means comprising means responsive to said rate of change signal to provide (81) a ready signal to said ready means (26) in response to said rate of change signal being less (79) than said predetermined magnitude.

**Patentansprüche**

1. Vorrichtung zum Anzeigen der Leistung, die für den Schwebeflug eines Hubschraubers verfügbar ist, der eine Triebwerksanlage mit wenigstens einem Triebwerk hat, mit:

einem Leistungsanzeiger;

einer Wandlereinrichtung zum Liefern von einem oder mehreren Parametersignalen, wobei jedes derartige Parametersignal einen zugehörigen gegenwärtigen Flugzeugzustand anzeigt; und Signalverarbeitungseinrichtungen, die auf die Parametersignale hin der Anzeigevorrichtung ein Schwebeflugleistungssignal liefern, das die für den Schwebeflug verfügbare Leistung anzeigt, dadurch gekennzeichnet, daß

die Parametersignale Triebwerksparametersignale umfassen, welche gegenwärtige Triebwerksbetriebszustände angeben, und ein Flugzeugflugparametersignal, das die gegenwärtige Fluggeschwindigkeit angibt; und daß

die Signalverarbeitungseinrichtungen eine Einrichtung (10) umfassen, die auf das Flugzeugflugparametersignal hin ein Verhältnissignal liefert, welches die Beziehung zwischen der Leistung, die während des Vorwärtsfluges bei der gegenwärtigen Fluggeschwindigkeit erforderlich ist, und der Leistung angibt, die für den Schwebeflug unter denselben Rotor-, Triebwerks-, Gewichts- und atmospärischen Bedingungen erforderlich ist, eine Einrichtung (12), die auf eine erste Anzahl der Triebwerksparametersignale hin ein Betriebsleistungssignal liefert, das die gegenwärtige Leistung angibt, die durch das Triebwerk dem Flugzeug zugeführt wird, eine Einrichtung (14), die auf das gegenwärtige Betriebsleistungssignal und das Verhältnissignal hin ein Leistung-erforderlich-für-Schwebeflug-Signal liefert, das die Leistung angibt, die zum Ausführen eines Schwebeflugmanövers unter den gegenwärtigen Rotor-, Triebwerks-, Gewichts- und atmosphärischen Bedingungen erforderlich ist, eine Einrichtung (16), die auf eine zweite Anzahl der Triebwerksparametersignale hin ein Maximalleistungssignal liefert, daß die Maximalleistung angibt, die gegenwärtig durch die Triebwerksanlage geliefert werden kann, und eine Einrichtung (18; 20), die das Schwebeflugleistungssignal an den Leistungsanzeiger (22) auf das Maximalleistungssignal und das Leistung-erforderlich-für-Schwebeflug-Signal hin abgibt.

2. Vorrichtung nach Anspruch 1, dadurch gekennzeichnet, daß

die Parametersignale weiger ein zweites Flugzeugflugparametersignal umfassen, das die gegenwärtige Höhe angibt; und daß

die Einrichtung (10) zum Liefern des Verhältnissignals das Verhältnissignal, das die Beziehung zwischen der Leistung, die während des Vorwärtsfluges bei der gegenwärtigen Fluggeschwindigkeit und Vertikalgeschwindigkeit erforderlich ist, und der Leistung angibt, die zum Schwebeflug unter denselben Rotor-, Triebwerks-, Gewichts- und atmosphärischen Bedingungen erforderlich ist, auf die Flugzeugflugparametersignale hiń liefert.

3. Vorrichtung nach Anspruch 1, dadurch gekennzeichnet, daß

die Einrichtung (18, 20) zum Abgeben des Schwebeflugleistungssignals an den Anzeiger das· Schwebeflugleistungssignal als die Differenz (18) zwischen dem Maximalleistungssignal und dem Leistung-erforderlich-für-Schwebeflug-Signal dividiert (20) durch das Leistung-erforderlich-für-Schwebeflug-Signal liefert, wodurch der Leistungsanzeiger den Überschuß oder den Mangel an Leistung beim Schwebeflug normiert auf die für den Schwebeflug erforderliche Leistung anzeigt.

4. Vorrichtung nach Anspruch 1, dadurch gekennzeichnet, daß

die Signalverarbeitungseinrichtungen Einrichtungen umfassen zum Liefern (77) auf das Betriebsleistungssignal hin eines Änderungsgeschwindigkeitssignals, welches die zeitliche Änderung des Betriebsleistungssignals angibt, zum Erzeugen (78, 81—85) eines neuen Wertes des Schwebeflugleistungssignals und zum Abgeben desselben an den Leistungsanzeiger, wenn das Anderungsgeschwindigkeitssignal unter einem vorbestimmten Schwellenwert ist, und zum Abgeben (78, 79, 85) eines früher erzeügten Schwebeflugleistungssignals an den Anzeiger (22), wenn das Änderungsgeschwindigkeitssignal über (79) dem vorbestimmten Schwellenwert ist.

5. Vorrichtung nach Anspruch 4, dadurch gekennzeichnet, daß

der Leistungsanzeiger eine Bereit-Einrichtung (26) enthält, die dem Piloten eine Anzeige liefert, daß seine Anzeige die gegenwärtige Anzeige ist; und

die Signalverarbeitungseinrichtungen eine Einrichtung umfassen, die auf das Änderungsgeschwindigkeitssignal hin ein Bereit-Signal an die Bereit-Einrichtung (26) abgibt (81), wenn das Änderungsgeschwindigkeitssignal kleiner (79) als der vorbestimmte Wert ist.

**Revendications**

1. Appareil pour indiquer la puissance disponible pour vol stationnaire d'un hélicoptère dont le groupe moto-propulseur comprend au moins un moteur, cet appareil étant composé:

d'un indicateur de puissance;

d'un transducteur pour délivrer un ou plusieurs signaux relatifs à des paramètres, chacun de ces signaux indiquant un état correspondant et momentané de l'aéronef, et

d'un système de traitement des signaux, sensible auxdits signaux relatifs aux paramètres, afin de fournir audit indicateur un signal de puissance pour vol stationnaire qui indique la puissance disponible pour assurer le vol stationnaire, et étant caractérisé par le fait que:

a) lesdits signaux relatifs à des paramètres comprennent des signaux relatifs aux paramètres du moteur qui indiquent les conditions momentanées de fonctionnement du moteur, et un signal relatif aux paramètres de vol de l'aéronef qui indique la vitesse momentanée relative à l'air ambiant, et que

b) ledit système de traitement des signaux comprend des moyens (10) pour fournir, en réponse audit signal relatif aux paramètres de vol de l'aéronef, un signal proportionnel indiquant la relation qui existe entre la puissance nécessaire pendant un vol en avant à la vitesse momentanée relative à l'air ambiant et la puissance nécessaire pour le vol stationnaire dans les mêmes conditions de rotor, de moteur, de poids et atmosphériques; des moyens (12) pour fournir, en réponse à une première pluralité desdits signaux relatifs aux paramètres du moteur, un signal de puissance de fonctionnement indiquant la puissance momentanée fournie par le moteur à l'aéronef, d'autres moyens (14) pour fournir, en réponse audit signal de puissance momentanée de fonctionnement et audit signal proportionnel, un signal indicatif de la puissance nécessaire pour assurer le vol stationnaire, qui indique la puissance nécessaire pour exécuter une manoeuvre de vol stationnaire dans les conditions présentes de rotor, de moteur, de poids et atmosphériques, des moyens complémentaires (16) pour délivrer, en réponse à une seconde pluralité desdits signaux relatifs aux paramètres du moteur, un signal de puissance maximale indiquant la puissance maximale que le groupe moto-propulseur peut fournir momentanèment, et enfin des moyens (18, 20) qui délivrent ledit signal de puissance pour vol stationnaire audit indicateur de puissance (22) en réponse audit signal de puissance maximale et dudit signal indicateur de la puissance nécessaire pour le vol stationnaire.

2. Appareil selon la Revendication 1, caractérisé en ce que lesdits signaux relatifs aux paramètres comprennent un second signal relatif aux paramètres de vol de l'aéronef qui indique l'altitude momentanée, et que lesdits moyens (10) prévus pour fournir ledit signal proportionnel délivrent ledit signal proportionnel qui indique la relation qui existe entre la puissance nécessaire pendant le vol en avant à la vitesse momentanée par rapport à l'air ambiant et à la vitesse verticale momentanée, d'une part, et la puissance nécessaire pour assurer le vol stationnaire, d'autre part, dans les mêmes conditions de rotor, de moteur, de poids et atmosphériques, en réponse auxdits signaux relatifs aux paramètres de vol de l'aéronef.

3. Appareil selon la Revendication 1, caractérisé en ce que lesdits moyens (18, 20) qui délivrent ledit signal de puissance pour vol stationnaire audit indicateur de puissance (22) fournissant ledit signal de puissance pour vol stationnaire en tant que différence (18) entre le signal de puissance maximale et ladite puissance nécessaire pour assurer le vol stationnaire, divisé (20) par ledit signal relatif à la puissance nécessaire pour assurer le vol stationnaire, de telle sorte que ledit indicateur de puissance indique l'excédent ou le défaut de puissance pendant le vol stationnaire normalisé par rapport à la puissance nécessaire pour assurer ce vol stationnaire.

4. Appareil selon la Revendication 1, caractérisé en ce que ledit système de traitement des signaux comprend des moyens (77) propres à délivrer, en réponse audit signal de puissance de fonctionnement, un signal relatif au taux de changement indiquant le taux de changement dans le temps dudit signal de puissance de fonctionnement, afin de générer (78, 81—85) une nouvelle valeur dudit signal de puissance nécessaire pour le vol stationnaire, et de l'appliquer audit indicateur de puissance, lorsque ledit signal du taux de changement se trouve au-dessous d'un seuil de grandeur prédéterminée, et pour fournir (78, 79, 85) audit indicateur (22) un signal de puissance pour vol stationnaire préalablement généré, lorsque ledit signal de taux de changement se trouve au-dessus (79) dudit seuil de grandeur prédéterminée.

5. Appareil selon là Revendication 4, caractérisé par le fait que ledit indicateur de puissance comprend un indicateur ''PRÊT'' (Ready) (26) pour indiquer au pilote que l'indication qu'il fournit est momentanée, et que ledit système de traitement des signaux comprend des moyens (81) sensibles audit signal de changement de taux afin de fournir un signal ''PRÊT'' (Ready) audit indicateur (26) lorsque ledit signal relatif au taux de changement (79) est inférieur à ladite grandeur prédéterminée.

FIG./

PERCENT OF HOVER POWER VS AIRSPEED IN LEVEL FLIGHT

FIG.2

*FIG. 3*

( S..KW. MAX )—40

N ⟨ ENG 1 DONE ⟩ Y — 41

42 — / LOAD C.I.T., C.I.P., C.D.P. /     / LOAD C.I.T., C.I.P., C.D.P. / — 63
/ OF ENG 1 /     / OF ENG 2 /

43 —| CORCTD TEMP = (C.I.T. + 256°K.) ÷ (.288°K.) |
44 —| ROOT TEMP = SQ.RT. (CORCTD TEMP) |

45 — / FTCH C1 AT (C.I.T.), (C.I.P.) /
46 — / FTCH C2 AT (C.I.T.), (C.I.P.) /
47 — / FTCH (EXH TEMP LIM) AT (C2), (CORCTD TEMP) /

48 —| NG LIM ADR = [EXH TEMP LIM] ÷ [(CORCTED TEMP)*(C2)] |

49 — / FTCH (NG/ROOT TEMP) LIM AT (NG LIM ADR) /

50 —| NG TEMP LIM = (NG/ROOT TEMP) LIM*(ROOT TEMP) |

51 — ⟨ NG TEMP LIM ≤ NG MAX ⟩ Y

N     52 —| NG MAX = NG TEMP LIM |

53 —| TORQ ADR = (NG MAX) ÷ (ROOT TEMP) |

54 — / FTCH[(TORQ)/(C.D.P.*C1*ROOT TEMP)] LIM AT (TORQ ADR) /

55 —| DIVSR = (C.D.P.)*(C1)*(ROOT TEMP) |
56 —| (TORQ LIM) = [(TORQ)/(C.D.P.*C1*ROOT TEMP)] LIM*DIVSR |

57 — ⟨ TORQ LIM ≤ MAX TORQ ⟩ Y

N     58 —| MAX TORQ = TORQ LIM |

59 —| MAX S.KW. = (MAX TORQ)*(NF SET) |

N ⟨ ENG 1 DONE ⟩ Y — 60

61 —| MAX S.KW.1 = MAX S.KW. |
| SET ENG 1 DONE |
    62

64 —| MAX S.KW. = (MAX S.KW.) + (MAX S.KW.1) |
| RST ENG 1 DONE |
65

66 — ( HOVR POWR (FIG. 4) )

*FIG.4*

$$\boxed{(\text{HOVR POWR})} - 70$$

$$\begin{array}{|c|}\hline \text{VERT VEL} = \text{K1}[(\text{ALT})n - (\text{ALT})m] - 71 \\\hline (\text{ALT})m = (\text{ALT})n \qquad\qquad - 72 \\\hline\end{array}$$

$$\boxed{\text{FTCH RATIO AT (A/S), (VERT VEL)}} - 73$$

$$\begin{array}{|c|}\hline \text{S. KW.1} = \text{NF1}*\text{Q1} \qquad\qquad - 74 \\\hline \text{S..KW.2} = \text{NF2}*\text{Q2} \qquad\qquad - 75 \\\hline (\text{OPRTNG S. KW.})n = \text{S.KW.1} + \text{S.KW.2} \quad - 76 \\\hline \text{OPRTNG S.KW. RATE} = (\text{OPRTNG S.KW.})n - (\text{OPRTNG S.KW.})m - 77 \\\hline\end{array}$$

$$N \longleftarrow \boxed{|\text{OPRTNG S. KW. RATE}| \le \text{MANVR THRSH}} \, 78$$

$$Y$$

$$\boxed{\text{RST READY IND}} - 79$$

$$\begin{array}{|c|}\hline 81 - \quad \text{SET READY IND} \\\hline 82 - \quad \text{S. KW. REQ HOVR} = (\text{OPRTNG S.KW.})n \\\hline 83 - \quad \text{MANVR S.KW.} = (\text{MAX S.KW.}) - (\text{S.KW. REQ HOVR}) \\\hline 84 - \text{HOVR MANVR POWR} = (\text{MANVR S.KW.}) \div (\text{S.KW. REQ HOVR})*\text{K2} \\\hline\end{array}$$

$$85 - \boxed{\text{OUTPUT HOVR MANVR POWR}}$$

$$86 - \boxed{(\text{E.O.R.})}$$

4